# EUROPÄISCHE PATENTANMELDUNG

(11) **EP 0 830 029 A2**
(43) Veröffentlichungstag der Anmeldung: **18.03.1998**
(21) Anmeldenummer: 97110343.7
(22) Anmeldetag: 25.06.1997
(51) Int. Cl.: H04N 7/26, H04N 11/04

(54) **Verfahren zur Reduzierung von Daten in Videosignalen**

(30) Priorität: 13.09.1996 DE 19637522
(71) Anmelder: ROBERT BOSCH GMBH, 70442 Stuttgart (DE)
(72) Erfinder: Fischer, Ralf, 31199 Diekholzen (DE)

(57) **Zusammenfassung**

Es wird ein Verfahren zur Übertragung von Videosignalen mit kleinen Bitraten vorgeschlagen, das es durch Vorhersage von Kodierungszuständen in benachbarten Blöcken ermöglicht, die Gesamtbitrate bei der Übertragung wesentlich zu reduzieren.

## Beschreibung

### Stand der Technik

Die Erfindung geht aus von einem Verfahren zur Übertragung von Videosignalen mit kleinen Bitraten nach der Gattung des Hauptanspruchs.

Es sind bereits Verfahren zur Kodierung, Datenreduzierung und Übertragung von Videosignalen über Kanäle mit kleinen Bitraten bekannt. Mit solchen Verfahren können bewegte Bilder komprimiert und mit sehr niedrigen Bitraten kodiert werden. Dabei werden verschiedene Bildformate unterstützt. Ein sehr häufiges Format ist das QCIF-Format, welches aus 176 horizontalen und 144 vertikalen Bildpunkten (Pixeln) besteht. Ein zu übertragendes und zuvor zu kodierendes Bild besteht aus den Komponenten Luminanz (Y) und Chrominanz (U, V). Die Luminanz stellt die Helligkeit in einem Bild dar und entspricht der Information eines normalen Schwarzweißbildes. Diese Komponente besitzt das Format 176 mal 144 Bildpunkte. Da das menschliche Auge wesentlich weniger empfindlich auf Farb- als auf Helligkeitsveränderung reagiert, werden die beiden Farbkomponenten U und V unterabgetastet, d. h. es werden lediglich 88 mal 76 Bildpunkte übertragen. Die folgenden Ausführungen beschränken sich immer auf die reine Helligkeitskomponente Y. Jedes Bild wird in Makroblöcke 4. Jeder Makroblock besteht aus 16 x 16 Bildpunkten. Jeder Luminanz-Makroblock ist wiederum in 4 Blöcke zu je 8x8 Pixel unterteilt.
Für die Videobildübertragung werden die Bilddaten eines Makroblocks kodiert. Das geschieht mit Hilfe einer Transformation in den Frequenzbereich, die Koeffizienten liefert. Die resultierenden Koeffizienten der Transformation werden quantisiert und die verbleibenden AC-Koeffizienten kodiert. Eine Datenreduktion kann dadurch erreicht werden, daß nach der Quantisierung viele oder alle Koeffizienten eines Blocks Null geworden sind und daher nicht mehr übertragen werden müssen. Welche der Blöcke nach der Quantisierung noch Koeffizienten enthalten und demnach kodiert und übertragen werden müssen, wird durch das Symbol CBPY (Coded Block Pattern for Luminance Y) für jeden Makroblock im Bitstrom angezeigt. Nach dem bekannten Verfahren ist die Reduzierung der Bitrate nur über eine gröbere Quantisierung und dadurch ein schlechteres Übertragungsbild zu erreichen.

### Vorteile der Erfindung

Das erfindungsgemäße Verfahren mit den kennzeichnenden Merkmalen des Hauptanspruchs hat demgegenüber den Vorteil, daß das Vorhandensein von zu übertragenden Koeffizienten der Blöcke und damit der Inhalt des Symbols CBPY durch eine Vorhersage und deren Bewertung festgelegt wird. Für das Symbol CBPY wird durch eine exklusive Oder-Verknüpfung des tatsächlichen mit dem vorhergesagten Muster ein Differenzmuster erzeugt, das in kodierter Form übertragen wird. Das hat den Vorteil, daß wesentlich weniger Information über die Makroblöcke übertragen werden muß. Immer wenn die Schätzung sehr nahe am realen Muster liegt, bedeutet das, daß nur eine geringere Bitrate über die Leitung übertragen werden muß. Dadurch wird eine bessere Bildqualität bei gleicher Bandbreite erreicht, da man die Quantisierungsschritte verkleinern kann.

Durch die in den Unteransprüchen aufgeführten Maßnahmen ist eine vorteilhafte Weiterbildung und Verbesserung des im Hauptanspruch angegebenen Verfahrens möglich.

Besonders vorteilhaft ist es, daß für die Schätzung, ob Koeffizienten übertragen werden müssen oder nicht die benachbarten Blöcke eines Blockes herangezogen werden. Es werden jeweils drei Blöcke betrachtet, die links, oberhalb und rechts oberhalb des zu schätzenden Blockes liegen. Vorteilhafter Weise wird für den Block, der rechts unten in einem Makroblock liegt der Vergleich mit den drei anderen Blöcken des Makroblocks genommen. Vorteilhafter Weise wird am Bildrand für Nachbarblöcken, die nicht mehr im Bild liegen, ein fester Wert zugrunde gelegt. Da im Normalfall drei Nachbarblöcke für die Schätzung zugrunde liegen, wird der zu schätzende Wert aus der Mehrheit der Nachbarblöcke gewonnen. Es ist von Vorteil, daß der geschätzte Wert eines Blockes mit dem realen Wert über eine exklusive Oder-Verknüpfung verbunden wird. Dadurch erhält man eine Wertung der Schätzung, die dazu führt, daß sich bei einer exakten Schätzung nach der XOR-Verknüpfung Null ergibt. Nach der Kodierung ist daher nur die Übertragung eines kurzen Kodes notwendig.

Es ist weiterhin von Vorteil, daß für die Kodierung ein Kode mit variablen Längen herangezogen wird, der im Fall einer Übereinstimmung von vorhergesagtem und realen Muster lediglich die Übertragung von zwei Bit erfordert.
Vorteilhafter Weise wird daher ein Huffmannkode verwendet.

### Zeichnung

Ein Ausführungsbeispiel der Erfindung ist in den Zeichnungen dargestellt und in der nachfolgenden Beschreibung näher erläutert. Es zeigt Figur 1 die Aufteilung eines Bildes in Blöcke usw., Figur 2 die räumliche Darstellung der Nachbarblöcke eines zu schätzenden Blockes, Figur 3 die Datenpakete für die Übertragung der Blöcke und Tabelle 1 die Kodierung des CBPY-Differenzmusters.

### Beschreibung des Ausführungsbeispiels

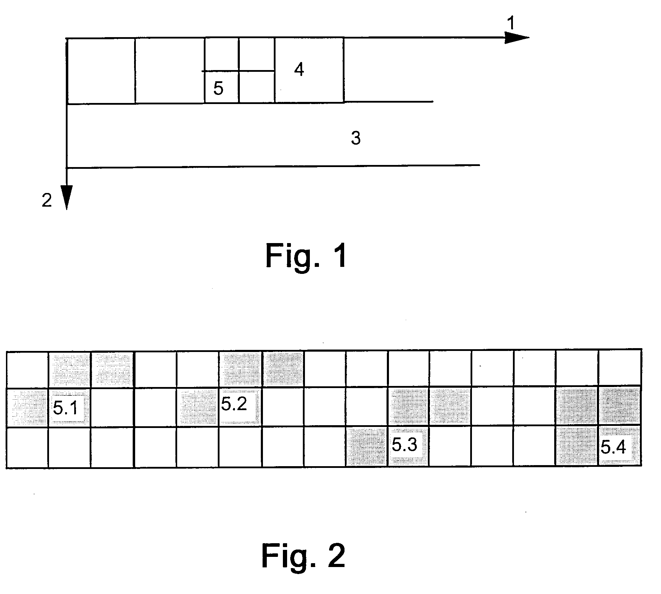

Figur 1 zeigt einen Ausschnitt eines Videobildes wobei mit 1 die Anzahl der horizontalen Bildpunkte in Richtung 2 die Anzahl der vertikalen Bildpunkte aufgetragen ist. Das Bild wird in Gruppen von Blöcken 3 eingeteilt, in denen Makroblöcke 4 untergebracht sind. Wenn man das Beispiel des QCIF-Formates wählt, das aus 176 horizontalen und 144 vertikalen Bildpunkten besteht, erhält man insgesamt 99 Makroblöcke mit 16 X 16 Pixeln. Jeder Makroblock ist wiederum in vier Blöcke 5 eingeteilt, die jeweils 8 mal 8 Pixel beinhalten. In dieser Betrachtungsweise werden wiederum nur die Luminanzkomponente Y betrachtet. Die Farbinformationen U und V werden im folgenden vernachlässigt. Die Reihenfolge der Blöcke 5 läuft von links oben nach rechts oben, dann nach links unten und rechts unten. Die Kodierung eines Makroblocks wird im Stand der Technik beschrieben. Für die Datenübertragung über Leitungen mit geringen Bitraten müssen die zu kodierenden Bildinformationen zuvor einer Datenreduktion unterworfen werden. Das kann man dadurch erreichen, daß nach einer Quantisierung der durch die DCT-Transformation entstandenen Koeffizienten in einem 8 x 8 Block alle Koeffizienten Null werden, und daher nicht mehr übertragen werden müssen.

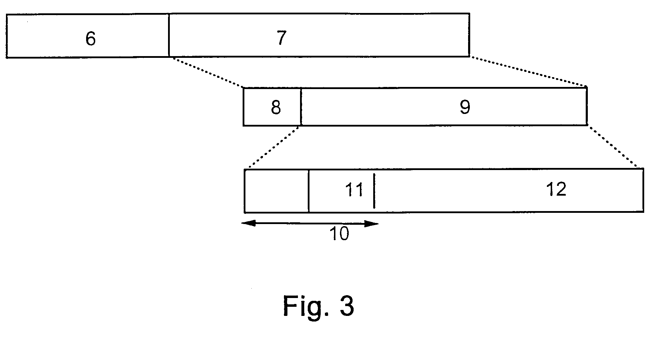

Figur 3 zeigt die Datenpaketstruktur, mit der die Videodaten übertragen werden. Die Informationen zu der Gruppe der Blöcke 7 wird mit einem vorangestellten Header 6 übertragen. In der Gruppe der Blöcke werden die Informationen zu den Makroblöcken 9 mit dem dazu vorangestellten optionalen Header 8 integriert. Innerhalb der Informationen über die Makroblöcke werden die Informationen zu den Einzelblöcken 12 mit vorangestelltem Header 10 übertragen. In diesem Header 10 findet sich das Feld CBPY 11 wieder, das anzeigt welcher der vier Blöcke nach der Quantisierung noch Koeffizienten enthält und demnach kodiert und übertragen werden muß. Dieses Feld CBPY 11 wird mit einem längenvariablen Code kodiert. Das CBPY-Eingangsmuster besteht in binärer Schreibweise aus 4 Bit, wobei jedes Bit den Modus des entsprechenden Blocks darstellt. Eine 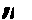 1" bedeutet, daß der entsprechende Block von Null verschiedene Koeffizienten enthält und demnach kodiert wird, eine 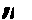 0" besagt, daß der Block nicht kodiert wird. So bedeutet z. B. das Muster 1111, daß alle vier Blöcke von Null verschiedene Koeffizienten enthalten und daher kodiert und übertragen werden. Das Muster 1010 besagt, daß nur Block 5.1 und 5.3 kodiert sind.
Für viele Videoszenen ist es der Fall, daß bbenachbarte Blöcke eines Bildes den gleichen Zustand im Bezug auf das Feld CBPY haben. Das heißt, daß die Wahrscheinlichkeit, daß der aktuelle Block kodiert wird höher ist, wenn die benachbarten Blöcke ebenfalls kodiert wurden. Umgekehrt ist es wahrscheinlich, daß ein Block nicht kodiert wird (also keine Koeffizienten enthält) wenn sein Nachbar auch nicht kodiert wurde. Diese Abhängigkeit macht man sich nach dem erfindungsgemäßen Verfahren zunutze, und versucht den Inhalt des aktuellen Blockes vorherzusagen. Die Auswahl der drei Nachbarn für die Vorhersage eines einzelnen Blockes wird in Figur 2 dargestellt. Für Block 5.1 werden der linke, der darüberliegende und der rechts darüberliegende Nachbar verwendet. Ebenso wird bei der Vorhersage für Block 5.2 und 5.3 verfahren. Für den Block 5.4 werden die drei anderen Blöcke des Makroblocks für die Vorhersage verwendet. Liegen die einzelnen Blöcke am Bildrand des Bildes werden die nächsten Nachbarn verwendet, die im Bild vorhanden sind und für die außerhalb des Bilds liegenden Nachbarblöcke ein fester Wert angenommen.

Ist ein nächster Nachbar kodiert, enthält sein Modus den Wert 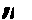 1" oder 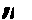 0" für unkodiert. Die Vorhersage für einen Block ist eine Mehrheitsentscheidung aus den Werten der Nachbarn, d. h. bei zwei mal 0 wird auf 0 entschieden und bei zwei mal 1 auf 1.
Dadurch, daß z.B. an einem linken Bildrand der linke Nachbarblock auf 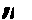 0" gesetzt wird, wird die Wahrscheinlichkeit größer, daß der geschätzte Wert für den Block am Bildrand 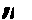 0" ist. Denn immer, wenn einer der beiden anderen Nachbarn eine 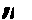 0" aufweist, erfolgt der Schätzwert"0". Das ist sinnvoll, da sich am Bildrand oftmals nur sehr wenig ändert und daher nur selten Koeffizienten vorhanden sind.
Nach der Vorhersage für alle vier Blöcke ergibt sich schließlich das vorhergesagte CBPY-Muster des aktuellen Makroblocks 4 das aus vier Bit besteht. Dieses vorhergesagte Muster wird einer exklusiven Oder-Verknüpfung (XOR) mit dem tatsächlichen CBPY-Muster unterzogen. Beispielsweise ist das reelle Muster 1010 und das Vorhergesagte 1110. Dann ergibt sich das Differenzmuster aus der Beziehung 1010 XOR, 1110=0100. Das bedeutet, daß es bei der Vorhersage eine Abweichung zum reellen Wert gibt. Ziel ist es, eine möglichst exakte Vorhersage des Musters zu erhalten. Stimmt die Vorhersage mit dem realen Muster genau überein, so ergibt sich nach der exklusiven Oder-Verknüpfung der Wert 0000. Durch die Vorhersage wird die Häufigkeit des Musters 0000 erhöht. Ebenso sind Differenzmuster, die nur eine 1 enthalten, häufig anzutreffen. Eine längenveränderliche Kodierungstabelle, eine Huffmann-Tabelle ist genau den Häufigkeiten der verschiedenen Differenzmuster angepaßt. Dadurch wird beispielsweise bei der Kodierung das Muster 0000 mit nur zwei Bit, das Muster 0001 mit drei Bit, das Muster 1111 aber mit 6 Bit kodiert. Tabelle 1 zeigt die Kodierung nach der Huffmann-Tabelle.

Für die Übertragung des Videosignals wird jetzt nicht das Differenzmuster übertragen, das aus vier Bit besteht, sondern die kodierte Form. Dadurch erreicht man eine wesentliche Reduktion der Bitrate. Der Empfänger dekodiert den Bitstrom und erhält das CBPY-Differenzmuster. Im Empfänger wird die gleiche Vorhersage wie auf der Senderseite durchgeführt, jedoch wird die XOR-Verknüpfung zwischen dem dekodierten Differenzmuster und dem Vorhersagemuster durchgeführt. Das Ergebnis daraus ist das reale CBPY-Muster.

**Tab. 1**

| **CBPY Differenzmuster** | **Code** |
|---|---|
| 0000 | 10 |
| 0001 | 010 |
| 0010 | 001 |
| 0011 | 0111 |
| 0100 | 1111 |
| 0101 | 11100 |
| 0110 | 01101 |
| 0111 | 00000 |
| 1000 | 1101 |
| 1001 | 11000 |
| 1010 | 11001 |
| 1011 | 01100 |
| 1100 | 0001 |
| 1101 | 00001 |
| 1110 | 111011 |
| 1111 | 111010 |

## Patentansprüche

1. Verfahren zur Reduzierung von Daten in Videosignalen für die Übertragung mit kleinen Bitraten, wobei das Videosignal in Gruppen von Blöcken (3), Makroblöcke (4) und Blöcke (5) aufgeteilt wird und die kodierten Bildinhalte der Blöcke in Datenpaketen (7), bestehend aus Informationsfeld und Header, übertragen werden, wobei im Header (10) der Blöcke ein Muster CBPY (11) übertragen wird, das anzeigt, ob nach Kodierung und Quantisierung des Bildinhalts von Null verschiedene Koeffizienten für die Blöcke (5) eines Makroblocks (4) vorliegen, dadurch gekennzeichnet, daß für jeden Block (5) aufgrund der Koeffizienten der benachbarten Blöcke (5) das Vorhandensein von Koeffizienten vorhergesagt wird und daß zwischen realen und vorhergesagten Mustern eine exklusive Oder-Verküpfung durchgeführt wird, deren Ergebnis in codierter Form übertragen wird.

2. Verfahren zur Übertragung von Videosignalen nach Anspruch 1, dadurch gekennzeichnet, daß für die Blöcke 5.1, 5.2 und 5.3, jeweils die Koeffizienten des linken Nachbarblocks, des darüberliegenden Blocks und dessen rechten Nachbar in die Vorhersage eingehen.

3. Verfahren zur Übertragung von Videosignalen nach Anspruch 1 oder 2, dadurch gekennzeichnet, daß für Block 5.4 die drei anderen Blöcke des Makroblocks (4) für die Vorhersage ausgewertet werden.

4. Verfahren zur Übertragung von Videosignalen nach Anspruch 1 bis 3, dadurch gekennzeichnet, daß für Blöcke (5) mit Lage am linken Bildrand für den außerhalb liegenden linken Nachbarblock der Wert 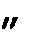 0" gesetzt wird.

5. Verfahren zur Übertragung von Videosignalen nach Anspruch 1 bis 3, dadurch gekennzeichnet, daß für Blöcke (5) mit Lage am rechhten Bildrand für den außerhalb liegenden rechten oberen Nachbarblock der Wert 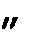 0" gesetzt wird.

6. Verfahren zur Übertragung von Videosignalen nach Anspruch 1 bis 3, dadurch gekennzeichnet, daß für Blöcke (5) mit Lage am oberen Bildrand für den außerhalb liegenden oberen Nachbarblock der Wert 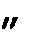 0" und für den rechten oberen Nachbarblock der Wert 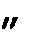 1" gesetzt wird.

7. Verfahren zur Übertragung von Videosignalen nach Anspruch 1 bis 6, dadurch gekennzeichnet, daß für die Vorhersage des Wertes die Mehrheit der Nachbarblöcke (5) zählt.

8. Verfahren zur Übertragung von Videosignalen nach Anspruch 1 bis 7, dadurch gekennzeichnet, daß der Wert der exklusiven Oder-Verknüpfung aus Vorhersage und realen Wert einer variablen Längenkodierung unterzogen wird.

9. Verfahren zur Übertragung von Videosignalen nach Anspruch 1 bis 8, dadurch gekennzeichnet, daß die variable Längenkodierung ein Huffmannkode ist.
